# FASCICULE DE BREVET EUROPEEN

(11) **EP 4 308 449 B1**
(45) Date de publication et mention de la délivrance du brevet: **07.05.2025**
(21) Numéro de dépôt: 22715610.6
(22) Date de dépôt: 16.03.2022
(51) Int. Cl.: B63H 9/072

(54) **SYSTEME DE TRACTION A AILE CAPTIVE AVEC DISPOSITIF DE SAISIE DES LIGNES DE PLIAGE**
ZUGSYSTEM MIT ANGEBUNDENEN FLÜGELN MIT EINER VORRICHTUNG ZUM GREIFEN VON FALZLINIEN
TETHERED-WING TRACTION SYSTEM COMPRISING A DEVICE FOR GRIPPING FOLDING LINES

(30) Priorité: 19.03.2021 FR 2102790
(43) Date de publication de la demande: 24.01.2024
(73) Titulaire: Kawasaki Kisen Kaisha Ltd, Tokyo 100-8540 (JP)
(72) Inventeur: JAN, Stéphane, 31450 Montgiscard (FR); FANTIN, Nicolas, 31140 Launaguet (FR)
(74) Mandataire: Junca, Eric
(86) Numéro de dépôt international: PCT/EP2022/056883
(87) Numéro de publication internationale: WO 2022/194963

(56) Documents cités:
- FR-A1- 3 082 184
- US-A1- 2007 157 868
- US-B1- 7 287 481

## Description

### DOMAINE TECHNIQUE

L'invention concerne le domaine des systèmes de traction à aile captive qui sont adaptés à déployer et replier une aile de traction par rapport à une plateforme de base, cette aile de traction étant adaptée à générer une force de traction sous l'effet du vent.

De tels systèmes de traction permettent le déploiement d'une aile de traction volante servant à la propulsion d'un véhicule, notamment un navire (en tant que mode de propulsion principal, ou à titre d'assistance), pour la production d'électricité, ou pour toute application tirant profit d'une telle force de traction.

### ART ANTÉRIEUR

La demande de brevet français FR3082184 décrit un système de traction à aile captive et un procédé de déploiement et de repli de l'aile de traction. L'aile de traction comporte des lignes de pliage fixées à son bord d'attaque, et le système comporte des moyens pour tirer au moins trois lignes de pliage afin de ramener le bord d'attaque contre le mât à au moins deux hauteurs différentes le long de ce mât.

Le document US7287481 B1 décrit également un système de traction à aile captive selon l'état de la technique.

Ce système de traction bénéficie d'un procédé de déploiement et de repli plus efficient et plus sûr.

### EXPOSÉ DE L'INVENTION

L'invention a pour but d'améliorer les systèmes de traction à aile captive de l'art antérieur.

À cet effet, l'invention vise un système de traction à aile captive, comportant :
- une aile de traction adaptée à générer une force de traction sous l'effet du vent, cette aile de traction présentant un bord d'attaque et un bord de fuite ;
- une plateforme de base à laquelle l'aile de traction est reliée par l'intermédiaire d'une ligne de traction, l'aile de traction étant adaptée à être déployée et repliée par rapport à cette plateforme de base ;
- un mât d'arrimage pour l'aile de traction, disposé sur la plateforme de base ;
- plusieurs lignes de pliage ayant chacune une extrémité fixée au bord d'attaque de l'aile de traction, en étant espacées les unes des autres le long de ce bord d'attaque.

Ce système de traction à aile captive comporte de plus :
- un charriot de pliage adapté à coulisser le long du mât d'arrimage ;
- un dispositif de saisie qui est rattaché au bord d'attaque de l'aile de traction et qui comporte un bras d'accrochage muni d'une tige d'accrochage, l'une des lignes de pliage étant saillante dans le prolongement de la tige d'accrochage ; et le charriot de pliage comporte un crochet de saisie qui est mobile entre une position rétractée et une position de saisie dans laquelle le crochet de saisie entoure la tige d'accrochage.

Selon un autre objet, l'invention vise un procédé de déploiement ou de repli de l'aile de traction d'un tel système de traction, ce procédé comportant une étape d'immobilisation du dispositif de saisie par rapport au charriot de pliage, dans une position où la tige d'accrochage est en vis-à-vis du crochet de saisie.

Dans tout le texte, les termes « un » ou « une » dans les formulations « un charriot », « un bras d'accrochage », « une tige », « un crochet », sont à comprendre comme « au moins un » ou « au moins une ».

Un tel système de traction à aile captive bénéficie d'une saisie automatisée des lignes de pliage avec un haut niveau de sureté et ce, quelles que soient les conditions extérieures relatives par exemple à la météo, aux mouvements du véhicule ou du navire, etc.

Un tel système de traction peut donc être entièrement automatisé. Son déploiement ou son repli ne nécessitent alors aucune intervention d'un opérateur. La saisie des lignes de pliage est en effet un point critique dans l'automatisation d'un tel système, car l'accrochage de ces lignes, qui sont par définition souples et mouvantes, est difficile et requiert généralement, dans l'art antérieur, une intervention humaine pour sécuriser la saisie des lignes de pliage par exemple grâce à des attaches de type mousqueton, ou requiert également des dispositifs d'immobilisation complexes et proéminents qui nécessitent de tendre les lignes en vue de leur saisie automatique.

L'invention permet notamment de mettre à profit l'arrimage du bord d'attaque de l'aile de traction sur le mât d'arrimage (durant les phases de déploiement ou de repli) pour mettre en œuvre de manière sure la saisie et le guidage des lignes de pliage quelle que soit la position de ces dernières et sans les contraindre.

L'invention permet de réaliser le pliage de l'aile de traction en disposant les lignes de pliage verticalement le long du mât d'arrimage, après leur saisie grâce au dispositif de saisie, par simple coulissement du ou des charriots de pliage.

Les moyens permettant la saisie des lignes de pliage permettent de saisir plusieurs lignes de pliage simultanément, tout en assurant une gestion individuelle de ces lignes de pliage (ou par paires de lignes de pliage) et de les ramener séquentiellement le long du mât suite à une seule opération de saisie.

Le système de traction selon l'invention peut comporter les caractéristiques additionnelles suivantes, seules ou en combinaison :
- le système comporte une ligne d'arrimage reliant le dispositif de saisie à la plateforme de base ;
- le dispositif de saisie est rattaché à une zone médiane du bord d'attaque ; les lignes de pliage s'étendent chacune entre la zone médiane, et une portion latérale du bord d'attaque ; la ligne de pliage qui est saillante de la tige d'accrochage est reliée par son extrémité opposée à l'une des portions latérales ;
- le dispositif de saisie comporte un corps sur lequel est monté pivotant le bras d'accrochage, entre une position de vol et une position d'accrochage dans laquelle la tige d'accrochage est disposée sensiblement verticalement ;
- la tige d'accrochage comporte un tube traversé par la ligne de pliage, cette ligne de pliage étant raccordée par son extrémité au bras d'accrochage ;
- le système comporte : une ligne guide reliant le dispositif de saisie au dispositif volant de commande de trajectoire ; une navette coulissante le long de la ligne guide, cette navette comportant un moyen de guidage traversé par la ligne d'arrimage ;
- le dispositif de saisie comporte un logement pour la navette, la navette étant mobile entre une configuration de coulissement dans laquelle elle coulisse le long de la ligne guide, et une configuration d'arrimage dans laquelle la navette est disposée dans son logement ;
- le dispositif de saisie comporte un levier de commande du pivotement du bras d'accrochage vers sa position d'accrochage, ce levier étant adapté à être actionné par la navette lorsqu'elle rejoint sa configuration d'arrimage ;
- le système comporte un charriot d'arrimage adapté à coulisser le long du mat d'arrimage, ce charriot d'arrimage comportant une interface d'emboitement pour le dispositif de saisie ;
- le charriot d'arrimage comporte des moyens d'immobilisation du dispositif de saisie contre l'interface d'emboitement ;
- les moyens d'immobilisation comportent un crochet d'immobilisation mobile entre une position rétractée et une position d'immobilisation dans laquelle le crochet d'immobilisation bloque le bras d'accrochage contre l'interface d'emboitement ;
- la navette présente une forme convexe adaptée à être logée dans une forme concave de l'interface d'emboitement, lorsque la navette est en configuration d'arrimage ;
- la navette présente une forme oblongue ;
- les lignes de pliage sont agencées par paires, les lignes de pliage d'une paire reliant le dispositif de saisie à des points du bord d'attaque situés symétriquement de part et d'autre du dispositif de saisie ; le dispositif de saisie comporte deux bras d'accrochage munis chacun d'autan de tiges d'accrochage que de paires de lignes de pliage ;
- les tiges d'accrochage sont disposées en escalier ;
- le système comporte autant de charriots de pliage que de paires de lignes de pliage, chaque charriot de pliage comportant une paire de crochets de saisie mobiles un entre une position rétractée et une position de saisie dans laquelle les crochets de saisie d'une paire entourent les tiges d'accrochage des deux bras d'accrochage ;
- l'aile de traction comporte une ligne de ferlage adaptée à ferler l'aile de traction ; le dispositif de saisie comporte une tige de ferlage, la ligne de ferlage étant saillante dans le prolongement de la tige de ferlage ; le système de traction comporte un charriot de ferlage adapté à coulisser le long du mât d'arrimage, le charriot de ferlage comportant un crochet de ferlage qui est mobile entre une position rétractée et une position de saisie dans laquelle le crochet de ferlage entoure la tige de ferlage ;
- le dispositif de saisie comporte un moyen de serrage adapté à occuper une position de serrage dans laquelle la ligne d'arrimage est maintenue fixe sur le dispositif de saisie, et adapté à occuper une position de relâchement dans laquelle la ligne d'arrimage coulisse librement par rapport au dispositif de saisie ;
- la ligne d'arrimage est prolongée au-delà du dispositif de saisie par une portion supplémentaire rattachée à l'aile de traction, la ligne de d'arrimage étant adaptée à réaliser une action supplémentaire sur la forme de l'aile de traction lorsque le moyen de serrage est en position de relâchement ;
- le crochet de saisie est commandé par un mécanisme actionné par un autre charriot adapté à coulisser le long du mât d'arrimage.

### PRÉSENTATION DES FIGURES

D'autres caractéristiques et avantages de l'invention ressortiront de la description non limitative qui suit, en référence aux dessins annexés dans lesquels :
- la figure 1 est une vue en perspective d'un système de traction selon l'invention ;
- la figure 2 illustre le système de traction vu de côté ;
- la figure 3 représente l'aile de traction du système de traction des figures 1 et 2, vue de face ;
- la figure 4 représente le système de traction vu de côté, durant une phase de repli de l'aile de traction ;
- la figure 5 est une vue en perspective partielle de l'aile de traction en cours de repli ;
- la figure 6 représente le système de traction vu de côté, durant une autre phase de repli de l'aile de traction ;
- la figure 7 illustre l'aile de traction pliée le long du mât d'arrimage ;
- la figure 8 est une vue agrandie de l'aile de traction montrant un dispositif de saisie qui est relié au bord d'attaque de l'aile de traction ;
- la figure 9 est une vue de détail de la figure 8 ;
- la figure 10 et la figure 11 sont des vues en perspective du dispositif de saisie ;
- la figure 12 est une vue de côté du dispositif de saisie ;
- la figure 13 est une vue partielle en perspective du dispositif de saisie
- la figure 14 illustre une variante pour l'interface d'emboitement du charriot de pliage ;
- la figure 15 est une vue en coupe de la figure 13 ;
- la figure 16 représente le dispositif de saisie et les charriots du système de traction durant une étape de repli de l'aile de traction ;
- la figure 17 représente le dispositif de saisie et les charriots du système de traction durant une autre étape de repli de l'aile de traction ;
- la figure 18 est une vue schématique de côté des éléments de la figure 17 ;
- la figure 19 représente le dispositif de saisie et les charriots du système de traction durant une autre étape de repli de l'aile de traction ;
- la figure 20 est similaire à la figure 15 pour un deuxième mode de réalisation du dispositif de saisie ;
- la figure 21 est similaire à la figure 18 pour le deuxième mode de réalisation du dispositif de saisie.

Les éléments similaires et communs aux divers modes de réalisation portent les mêmes numéros de renvoi aux figures.

### DESCRIPTION DÉTAILLÉE

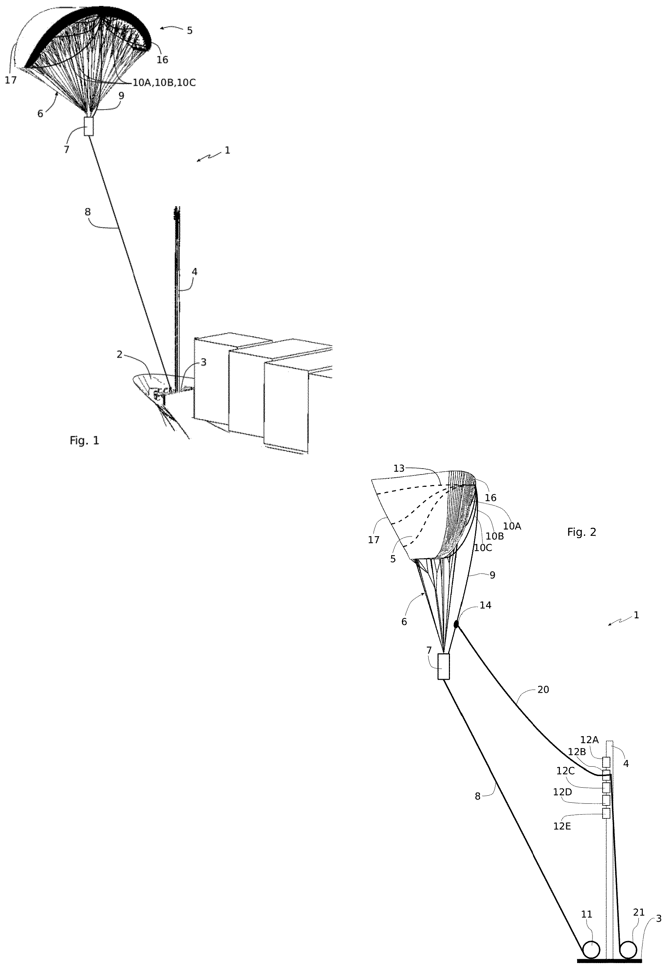

La figure 1 illustre un système de traction 1 à aile captive, monté sur un navire 2 qui est, dans cet exemple, un navire de fret maritime (sur la figure 1, seul l'avant du navire a été représenté).

Dans le présent exemple, le système de traction 1 est monté à la proue du navire 2 et est actionné comme un moyen complémentaire de propulsion du navire permettant une économie de carburant. Dans ce contexte, le système de traction 1 est dimensionné selon le tonnage du navire à tracter et est prévu pour être déployé et replié de manière automatique.

En variante, ce système de traction 1 peut être utilisé pour toute autre application où un tel système de traction déployable et repliable automatiquement est souhaité, par exemple comme moyen principal de propulsion d'un navire, pour la propulsion de tout autre véhicule, pour la production d'électricité, etc.

Le système de traction 1 comporte une plateforme de base 3 qui est ici fixée sur le pont du navire 2 et sur laquelle est monté un mât d'arrimage 4 prévu pour les opérations de déploiement et de repli automatiques du système.

Le système de traction 1 comporte de plus une aile de traction 5 qui est adaptée à générer une force de traction sous l'effet du vent. Dans le présent exemple, l'aile de traction 5 est une voile de type parapente. Tout autre équipement volant adapté à générer une force de traction sous l'effet du vent peut alternativement être employé, tels que cerfs-volants, équipements de vol à voile, voiles de type « kite » (en anglais), etc. L'aile de traction 5 comporte, de manière classique, un bord d'attaque 16 destiné à être exposé au vent incident et un bord opposé, dit bord de fuite 17.

L'aile de traction 5 est reliée par un ensemble de lignes de suspente 6 à un dispositif volant de commande de trajectoire 7 qui est adapté à agir sur les lignes de suspentes 6 pour piloter le vol de l'aile de traction 5.

Le système de traction 1 comporte de plus une ligne de traction 8 reliant le dispositif volant de commande de trajectoire 7 à la plateforme de base 3. La force de traction générée par l'aile de traction 5 est transmise par la ligne de traction 8 au navire 2 pour sa propulsion, et la ligne de traction est dimensionnée en conséquence. Dans le cadre de la traction d'un navire de fret maritime, la ligne de traction peut être par exemple un câble textile dont le diamètre peut atteindre plusieurs centimètres.

Le dispositif volant de commande de trajectoire 7 permet de piloter le vol de l'aile de traction 5 afin d'orienter et de positionner l'aile de traction et éventuellement d'entrainer l'aile de traction 5 à décrire des figures de vol permettant d'augmenter la force de traction sur le navire. Le contrôle de la trajectoire de l'aile de traction 5 est ici obtenu en commandant la longueur de certaines lignes de suspente mobiles, de manière classique dans le domaine des ailes volantes. L'ensemble des lignes de suspente 6 comporte en effet des lignes de suspente fixes (c'est-à-dire qui présente une longueur fixe entre leur rattachement à l'aile de traction 5 et leur rattachement au dispositif volant de commande de trajectoire 7), et des lignes de suspente mobiles dont la longueur est variable. Le dispositif volant de commande de trajectoire 7 est ainsi adapté à tirer sur certaines lignes de suspente mobiles et/ou à relâcher d'autres lignes de suspente mobiles, de sorte que le profil aérodynamique de l'aile de traction 5 est modifié en vue de contrôler sa portance, sa trajectoire, etc. La modification du profil d'une aile de traction pour la commande de sa trajectoire est réalisée de manière classique et ne sera pas décrite plus en détail ici.

L'aile de traction 5 comporte de plus une ligne guide 9 et plusieurs lignes de pliage 10A,10B,10C qui sont toutes solidaires du bord d'attaque 16, par au moins l'une de leurs extrémités.

La figure 2 est une vue de profil du système de traction 1 en phase de traction du navire, comme sur la figure 1. La figure 2 illustre de plus schématiquement des éléments constitutifs du système de traction 1.

La ligne de traction 8 est reliée à la plateforme de base 3 par l'intermédiaire d'un treuil 11 commandé par un moteur, par exemple électrique ou hydraulique, adapté à dérouler la ligne de traction 8 pour permettre à l'aile de traction 5 de prendre de l'altitude, ou au contraire d'enrouler cette ligne de traction 8 pour ramener l'aile de traction 5 vers la plateforme de base 3.

Les figures 1 et 2 illustrent le système de traction 1 dans une configuration de traction, l'aile de traction 5 étant déployée et en vol, et le système participant à la propulsion du navire.

L'aile de traction 5 comporte une ligne de ferlage 13 qui se divise en plusieurs lignes (représentées en pointillés sur la figure 2) dont les extrémités sont reliées au bord de fuite 17 de l'aile 5. Cette ligne de ferlage 13 peut être saisie au niveau du bord de fuite 16 de l'aile de traction 5, et une traction sur cette ligne de ferlage 13 entraine le ferlage par compression de l'aile 5 dans le but de la ranger.

Le système de traction 1 comporte des charriots 12A, 12B, 12C, 12D, 12E qui sont au nombre de cinq dans le présent exemple. Ces charriots sont fixés de manière coulissante sur le mât d'arrimage 4 et comportent chacun une motorisation de sorte que la position de chaque charriot le long du mât d'arrimage 4 peut être pilotée. Ces charriots sont prévus pour saisir et guider les lignes de pliage 10A, 10B, 10C et la ligne de ferlage 13 durant les phases de déploiement ou de repli décrites plus loin.

Ces charriots sont agencés comme suit :
- le charriot 12A est un charriot de ferlage et est conçu pour saisir la ligne de ferlage 13 ;
- le charriot 12B est un charriot d'arrimage et est conçu pour assurer l'arrimage du bord d'attaque 16 de l'aile de traction 5 ;
- le charriot 12C est un premier charriot de pliage et est conçu pour saisir la première paire de lignes de pliage 10A ;
- le charriot 12D est un deuxième charriot de pliage et est conçu pour saisir la deuxième paire de lignes de pliage 10B ;
- le charriot 12E est un troisième charriot de pliage et est conçu pour saisir la troisième paire de lignes de pliage 10C.

En variante, le système de traction 1 comporte autant de charriots que nécessaires pour saisir les lignes de pliage ou de ferlage, dont le nombre peut varier par rapport à l'exemple décrit.

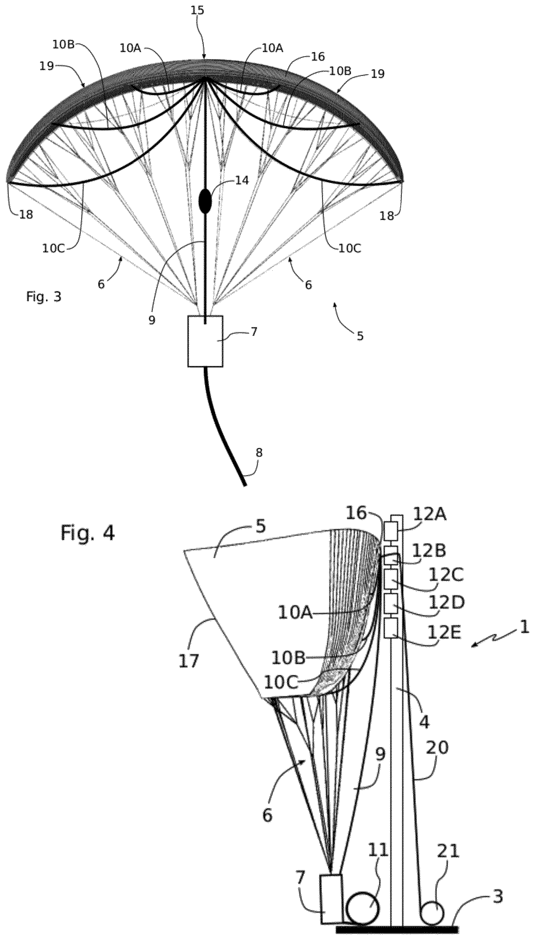

Les lignes de pliage 10A, 10B, 10C sont agencées par paire comme illustré à la figure 3. Le bord d'attaque 16 de l'aile de traction 5 est, dans la présente description, divisé en une zone médiane 15 et en deux bords latéraux 19 s'étendant de part et d'autre de cette zone médiane 15, entre la zone médiane 15 et chacune des extrémités latérales 18 du bord d'attaque 16.

Sur cette figure 3, la vue de face de l'aile de traction 5 illustre le cheminement des lignes de pliage 10A, 10B, 10C et leur agencement par rapport au bord d'attaque 16 :
- une première paire de lignes de pliage 10A comporte deux lignes chacune présentant une première extrémité reliée au niveau de la zone médiane 15 du bord d'attaque 16, et une deuxième extrémité qui est directement reliée au bord d'attaque 16, à une certaine distance de la zone médiane 15, sur l'une des portions latérales 19 du bord d'attaque 16 ;
- une deuxième paire de lignes de pliage 10B comporte deux lignes chacune présentant une première extrémité reliée au niveau de la zone médiane 15, et une deuxième extrémité directement reliée au bord d'attaque 16, sur l'une des portions latérales 19, et dans cet exemple approximativement au milieu de chaque portion latérale 19, c'est-à-dire approximativement à mi-chemin entre la zone latérale 15 et l'extrémité latérale 18 ;
- une troisième paire de lignes de pliage 10C comporte deux lignes reliant chacune la zone médiane 15 à une portion du bord d'attaque 16 qui est à proximité de l'extrémité latérale 18.

La figure 3 illustre également le cheminement de la ligne guide 9 entre la portion centrale 15 et le dispositif volant de commande de trajectoire 7.

En référence de nouveau à la figure 2, le système de traction 1 comporte une ligne d'arrimage 20 qui est enroulée sur un treuil d'arrimage 21 monté sur la plate-forme de base 3. La ligne d'arrimage 20 part du treuil 21 et est ensuite guidée dans le charriot d'arrimage 12B par une ou plusieurs poulies (ou par des éléments à faible friction, ou tout autre élément permettant de faire cheminer de manière coulissante la ligne d'arrimage 20 dans le charriot d'arrimage 12B). La ligne d'arrimage 20 passe ensuite dans une navette 14 qui est coulissante le long de la ligne guide 9.

À partir de la configuration de traction des figures 1 et 2, l'aile de traction 5 peut être repliée selon le procédé décrit ci-après.

À partir des positions des figures 1 et 2, les treuils 11 et 21 sont d'abord commandés pour ramener la ligne de traction 8 et la ligne d'arrimage 20 de sorte que le dispositif volant de commande de trajectoire 7 vienne se poser sur la plate-forme de base 3, tandis que la navette 14 remonte le long de la ligne guide 9 au fur et à mesure de la descente de l'aile de traction 5.

Cette opération se poursuit jusqu'à la position de la figure 4 dans laquelle :
- le dispositif volant de commande de trajectoire 7 est posé par rapport à la plateforme de base 3, par exemple sur un support adapté (non représenté) ;
- la navette 14 a coulissé vers le haut, sur toute la longueur de la ligne guide 9, jusqu'à son extrémité qui est à proximité de la zone médiane 15.

La ligne d'arrimage 20 passe dans le charriot d'arrimage 12B et maintient le bord d'attaque 16 par traction contre le charriot d'arrimage 12B. L'aile de traction 5 est ensuite bloquée dans cette position arrimée (comme décrit plus loin), la tension sur la ligne d'arrimage 20 n'est plus nécessaire, et la saisie des lignes peut avoir lieu.

Pour réaliser la saisie des lignes (ces opérations n'ont pas forcément lieu dans cet ordre) :
- le charriot de ferlage 12A saisit la ligne de ferlage 13 ;
- le premier charriot de pliage 12C saisit la première paire de lignes de pliage 10A ;
- le deuxième charriot de pliage 12D saisit la deuxième paire de lignes de pliage 10B ;
- le troisième charriot de pliage 12E saisit la troisième paire de lignes de pliage 10C.

Les saisies de lignes sont réalisées grâce à des crochets sur les charriots, ainsi qu'un dispositif de saisie, comme exposé plus loin.

Les charriots de pliage 12C, 12D, 12E entament ensuite un mouvement de descente le long du mât d'arrimage 4 en coulissant leurs crochets le long des lignes qui ont été crochetées.

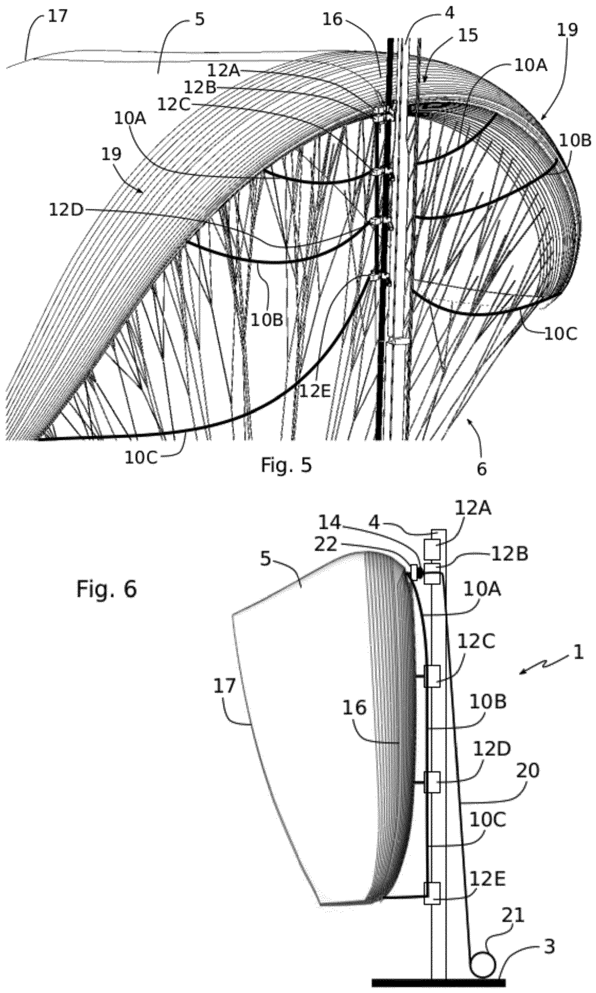

La figure 5 est une vue en perspective illustrant cette opération de descente des charriots de pliage. Chacun des charriots de pliage 12C, 12D, 12E entraine ainsi chacune des lignes de pliage progressivement vers une configuration où les lignes sont tendues verticalement depuis la zone médiane 15 (qui est arrimée au charriot d'arrimage 12B qui reste fixe), le long du mât d'arrimage 4. Cette opération permet de ramener les portions latérales 19 verticalement le long du mât d'arrimage 4.

Les figures 6 (vue de côté) et 7 (vue en perspective) illustrent l'aile de traction 5 après cette opération de pliage, c'est-à-dire lorsque les charriots de pliage 12C, 12D, 12E sont chacun dans leur position basse respective.

L'aile de traction 5 est alors repliée le long du mât d'arrimage 4, c'est-à-dire que les deux portions latérales 19 du bord d'attaque 16 s'étendent verticalement le long du mât d'arrimage 4, tandis que la zone médiane 15 est maintenue arrimée contre le charriot d'arrimage 12B.

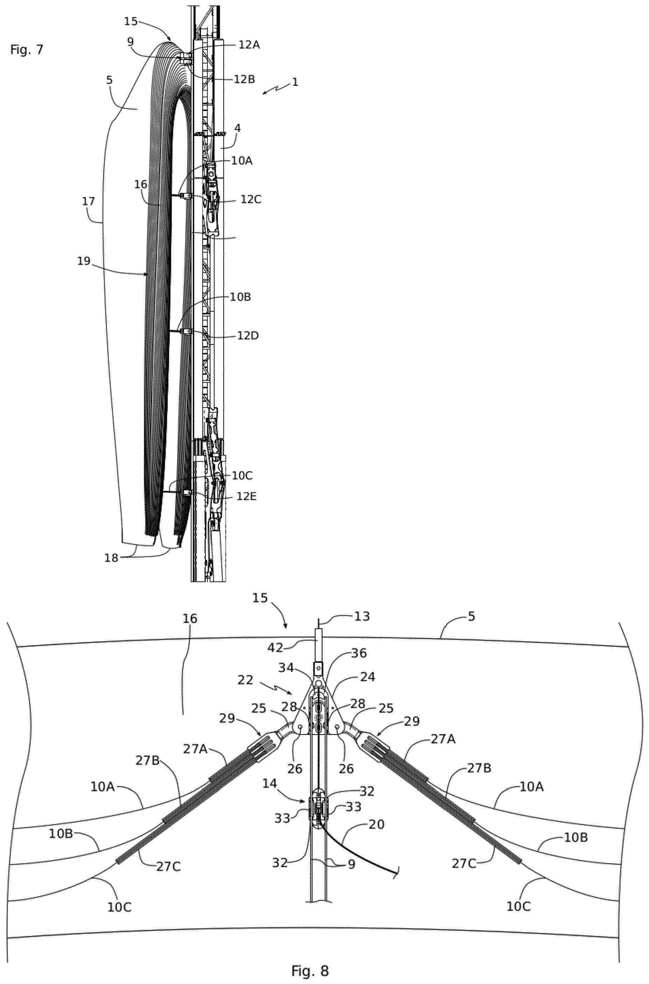

À partir de cette position des figures 6 et 7, l'aile 5 peut alors être ferlée. Le charriot de ferlage 12A (qui a saisi la ligne de ferlage 13) est alors commandé pour coulisser vers le haut le long du mât d'arrimage 4, et exerce ainsi une traction sur la ligne de ferlage 13, ce qui entraine le ferlage de l'aile de traction 5. Dans le présent exemple, le ferlage se fait par compression, en rapprochant le bord de fuite 17 du bord d'attaque 16.

En référence à la figure 6, l'arrimage de l'aile de traction 5 par rapport au charriot d'arrimage 12B est réalisé par la coopération de la ligne d'arrimage 20, du charriot d'arrimage 12B, de la navette 14, et d'un dispositif de saisie 22.

La figure 8 est une vue de détail de la figure 3, illustrant l'aile de traction 5 vue de face et montrant la zone médiane 15, et le rattachement des lignes de pliage 10A, 10B, 10C et de la ligne de ferlage 13 à la zone médiane 15 du bord d'attaque 16, par l'intermédiaire du dispositif de saisie 22.

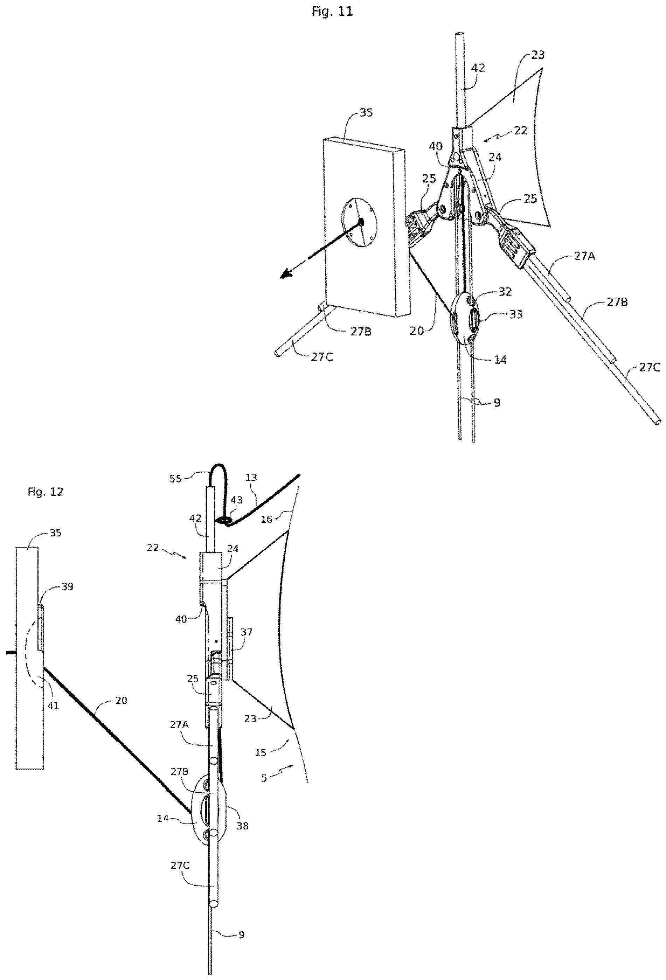

Le dispositif de saisie 22 est relié au bord d'attaque 16 de l'aile de traction 5, au niveau de la zone médiane 15, par un pylône 23 (visible notamment sur la vue de côté de la figure 12). Le pylône 23 est ainsi dénommé par analogie avec le pylône d'un avion, c'est-à-dire le mât réacteur, en termes aéronautiques. Le pylône 23 est de préférence réalisé par une nervure de matériau léger et résistant tel qu'un matériau composite à fibres de carbone. Le pylône 23 est fixé sur le dispositif de saisie 22 et sur un renfort cousu sur le bord d'attaque 16 de l'aile de traction 5.

Le dispositif de saisie 22 peut, en variante, être relié par tout autre moyen, souple ou rigide, au bord d'attaque 16, tel que des liens textiles ou tout autre élément permettant de faire en sorte qu'une traction sur le dispositif de saisie 22 entraine une traction sur le bord d'attaque 16.

Le dispositif de saisie 22 comporte un corps 24 et deux bras d'accrochage 25, montés pivotant sur ce corps 24, chacun autour d'un axe 26. Chacun des bras d'accrochage 25 comporte une première tige d'accrochage 27A, une deuxième tige d'accrochage 27B de longueur supérieure, et une troisième tige d'accrochage 27C de longueur encore supérieure (les tiges d'accrochage 27A, 27B, 27C sont vues en coupe sur la figure 8). Cette disposition dans laquelle les tiges d'accrochage juxtaposées présentent une longueur qui va croissante, ou décroissante, est ici dénommée « en escalier ».

Dans le présent exemple, les tiges d'accrochage 27A, 27B, 27C sont constituées par des tubes emmanchés en force dans des alésages prévus à cet effet du bras d'accrochage 25.

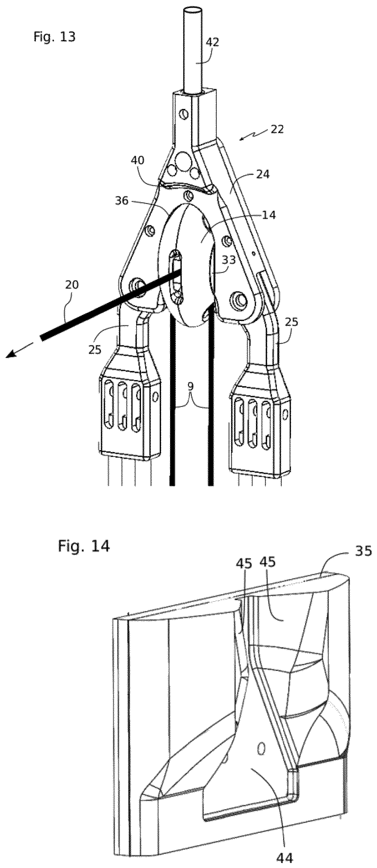

Les bras d'accrochage sont mobiles par rapport au corps 24, entre une position de vol (celle de la figure 8) et une position d'accrochage (celle de la figure 13) dans laquelle les tiges d'accrochage 27A, 27B, 27C sont disposées sensiblement verticalement (lorsque l'aile de traction 5 est dans sa position normale d'arrimage).

Chaque bras d'accrochage 25 comporte de plus un levier 28, c'est-à-dire une portion s'étendant au-delà de l'axe 26 et permettant d'agir sur le bras d'accrochage 25 pour le replier.

Chaque ligne de pliage 10A, 10B, 10D, 10C qui rejoint la zone médiane 15 est reliée à une tige d'accrochage 27A, 27B, 27C de sorte à être saillante dans le prolongement de cette tige d'accrochage. Autrement dit, l'extrémité de la tige d'accrochage se prolonge par la ligne de pliage.

Dans le présent exemple, où les tiges d'accrochage sont réalisées par des tubes, la ligne de pliage est avantageusement insérée dans le tube, traverse tout le tube, jusqu'à une zone de fixation 29 du bras d'accrochage 25.

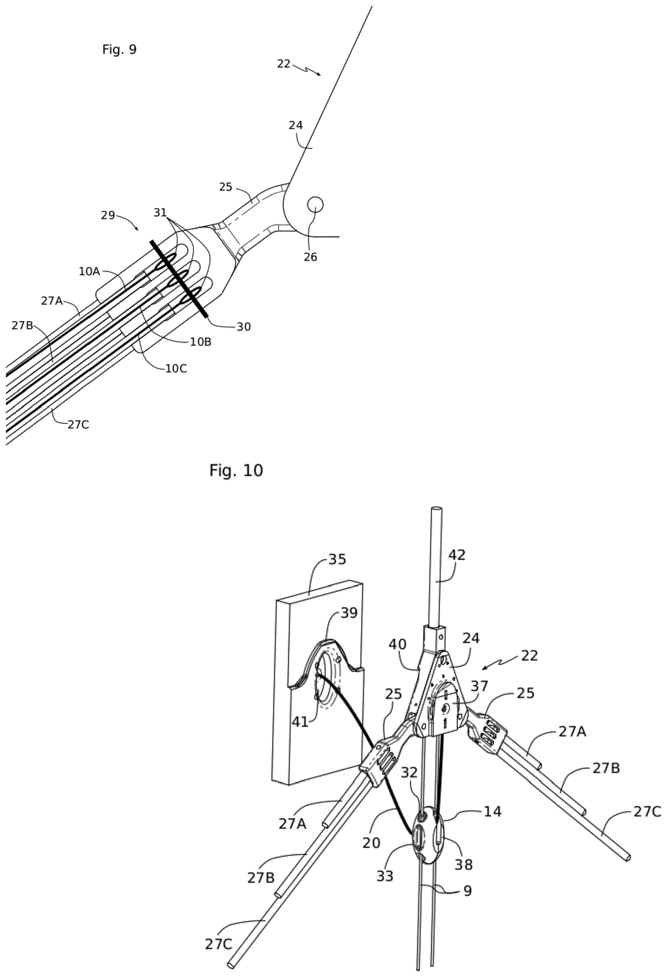

La figure 9 est une vue de détail de la zone de fixation 29. Chaque ligne de pliage 10A, 10B, 10C traverse le tube de la tige d'accrochage 27A, 27B, 27C pour déboucher dans la zone de fixation 29. L'extrémité de chaque ligne de pliage 10A, 10B, 10C est maintenue en place par un axe traversant 30 passant par exemple dans un oeil épissé 31 de la ligne de pliage 10A, 10B, 10C.

La liaison pivot entre les bras d'accrochage 25 et le corps 24 permet au bras d'accrochage 25 de prendre naturellement la position d'écartement illustrée à la figure 8 durant le vol de l'aile de traction 5, les bras d'accrochage 25 suivant ainsi l'ouverture dictée par les lignes de pliage 10A, 10B, 10C qui s'étendent en direction de leur autre extrémité reliée plus loin sur le bord d'attaque 16. Le dispositif de saisie 22 peut, en supplément, comporter un élément élastique (ressort ou autre) sollicitant les bras d'accrochage 25 vers leur position de vol de la figure 8.

Cette position de vol des bras d'accrochage 25 a pour fonction de sécuriser encore l'accrochage automatique des lignes, en limitant les risques d'emmêlement des bras d'accrochage 25 et des tiges d'accrochage 27A, 27B, 27C avec les autres lignes telles que la ligne guide 9 et la ligne d'arrimage 20.

La navette 14 est également représentée en coupe sur la figure 8. La navette 14 comporte deux orifices de coulissement 32, et est ici de forme oblongue avec deux méplats latéraux 33. La forme oblongue de la navette 14 permet un guidage et une orientation angulaire (autour d'un axe horizontal) du dispositif de saisie 22.

La ligne guide 9 est ici constituée par une paire de lignes tendues entre le corps 24 et le dispositif volant de commande de trajectoire 7. Dans le présent exemple, la paire de lignes guides 9 forme une boucle autour d'une butée 34 du corps 24.

La ligne guide 9 est ainsi rattachée à zone médiane 15 par l'intermédiaire du dispositif de saisie 22.

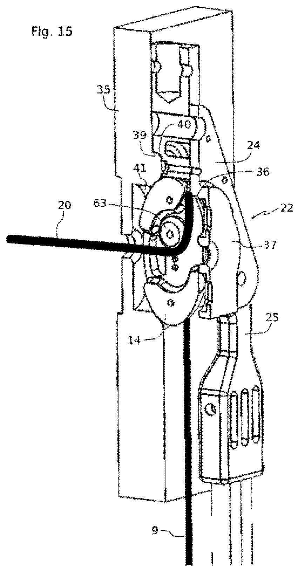

La ligne d'arrimage 20 passe à travers la navette 14 et est reliée au corps 24. La navette 14 comporte un moyen de guidage traversé par la ligne d'arrimage 20 et permettant le libre coulissement de la ligne d'arrimage 20. Dans le présent exemple, ce moyen de guidage est réalisé par un réa 63 (voir figure 15) et peut être réalisé en variante par tout type de moyen de guidage, tels que poulies ou éléments à faible friction. La ligne d'arrimage 20 s'étend ainsi en provenance du charriot d'arrimage 12B, traverse la navette 14 de manière coulissante, en étant guidée en direction du corps 24.

Les figures 10 et 11 illustrent le dispositif de saisie 22 en perspective selon deux angles de vue différents. Sur la figure 10, la face du dispositif de saisie 22 qui est visible est celle qui est tournée vers l'aile de traction 5 (la chape 23 n'ayant pas été représentée).

Sur la figure 11, la face visible du dispositif de saisie 22 est celle qui est tournée vers le charriot d'arrimage 12B.

Le dispositif de saisie 22 est représenté en vis-à-vis d'une interface d'emboitement 35 qui est fixée sur le charriot d'arrimage 12B (le reste du charriot d'arrimage 12B n'a pas été représenté).

La position des figures 10 et 11 illustre une position intermédiaire de l'opération d'arrimage de l'aile de traction 5 lors de son procédé de repli. Dans cette position, la ligne de traction 8 a ramené l'aile de traction 5 de sorte que son bord d'attaque 16 soit en vis-à-vis du charriot d'arrimage 12B, et la ligne d'arrimage 20 est en cours d'enroulage par son treuil 21, une traction s'exerçant alors sur la ligne d'arrimage 20 (illustrée par la flèche de la figure 11).

Cette opération entraine une remontée de la navette 14 le long de la ligne guide 9. Le doublement de la ligne guide 9 permet ici un coulissement de la navette 14 sans pivotement autour d'un axe vertical. Une liaison glissière est ainsi assurée, au lieu d'une liaison pivot glissant.

Le dispositif de saisie 22 comporte, au niveau du corps 24, un logement 36 destiné à recevoir la navette 14. Le logement 36 est délimité par des parois latérales coopérant avec les deux méplats 33 de la navette 14, et par une paroi de fond 37 coopérant elle-même avec un autre méplat 38 de la navette 14.

La figure 12 illustre les pièces des figures 10 et 11, vues de profil. L'interface d'emboitement 35 comporte des éléments permettant l'arrimage du dispositif de saisie 22 dans une position prédéfinie. Dans le présent exemple, ces éléments comportent un décrochement 39 qui est complémentaire d'un décrochement 40 du corps 24. La navette 14 fait également partie de ces éléments de positionnement, car elle est prévue pour s'engager dans une empreinte 41 de l'interface d'emboitement 35. Le décrochement 40 présente de plus un important avantage en matière de reprise d'efforts, car la coopération des décrochements 39 et 40 permet de reprendre l'ensemble des efforts verticaux qui vont s'exercer sur le dispositif de saisie 22 lors des opérations de pliage, ces efforts pouvant être supérieurs à 15 kN.

L'empreinte 41 comporte des parois internes permettant de recevoir et de positionner la navette 14. La forme ovoïde de la navette 14, et son complément dans la forme de l'empreinte 41, garantissent le positionnement prédéfini, lors de l'arrimage du dispositif de saisie 22 sur l'interface d'emboitement 35.

La figure 12 illustre également l'agencement de la ligne de ferlage 13. Le dispositif de saisie 22 comporte une tige de ferlage 42 saillante verticalement par le dessus du corps 24. La ligne de ferlage 13 est saillante dans le prolongement de la tige de ferlage 24. Dans le présent exemple, la tige de ferlage 42 est réalisée par un tube emmanché dans le corps 24, la ligne de ferlage passant dans ce tube et son extrémité étant fixée sur le corps 24.

Entre son rattachement à la tige de ferlage 42 et son parcours en direction du bord de fuite 17, la ligne de ferlage 13 forme une boucle 55 et passe dans un anneau 43 qui est solidaire du tube 42. L'anneau 43 est par exemple un anneau à faible friction, ou peut être réalisé par un tube ou une poulie. Une traction sur la boucle 55 entraine ainsi une traction sur la ligne de ferlage 13 et donc le ferlage de l'aile de traction 5.

Par ailleurs, la traction sur la ligne d'arrimage 20, durant la phase d'arrimage de l'aile de traction, provoque la remontée de la navette 14 et se conclut par l'entrée de la navette 14 dans le logement 36, comme illustré à la figure 13. La navette 14 est alors immobilisée dans le logement 36, grâce à l'ajustement dimensionnel permettant l'appui plan sur plan des méplats 33, 38 contre des surfaces internes du logement 36.

La navette 14 est ainsi mobile entre une configuration de coulissement dans laquelle elle coulisse le long de la ligne guide 9, et une configuration d'arrimage dans laquelle la navette 14 est disposée dans son logement 36.

L'entrée de la navette 14 dans le logement 36 active de plus les leviers 28, ce qui entraine la fermeture des bras d'accrochage 25, c'est-à-dire leur passage en position verticale, et leur maintien dans cette position par la présence de la navette 14.

Lorsque le dispositif de saisie 22 et la navette 14 sont dans la position de la figure 13, la poursuite de la traction sur la ligne d'arrimage 20 entraine le rapprochement du dispositif de saisie 22 vers l'interface d'emboitement 35, jusqu'à l'accouplement de ces deux éléments.

L'accouplement du dispositif de saisie 22 et de l'interface d'emboitement 35 se fait dans la position prédéterminée requise par l'emboitement des décrochements 39, 40, et par l'emboitement de la navette 14 dans l'empreinte 41. La forme ovoïde de la navette 14 permet, lors de l'arrimage, de ramener le dispositif de saisie 22 vers cette position prédéterminée, même en cas de torsion de la ligne d'arrimage 20, c'est-à-dire même en cas de rotation du dispositif de saisie 22 autour de la ligne d'arrimage 20. La forme convexe de la navette 14 est ainsi adaptée à être logée dans une forme concave de l'interface d'emboitement 35, lorsque la navette 14 est en configuration d'arrimage, la navette 14 entrainant si besoin la rotation de l'ensemble formé du dispositif de saisie 22 et de la navette 14, grâce à la forme ovoïde de la navette 14, sous la traction de la ligne d'arrimage 20.

La figure 14 illustre une variante de réalisation pour l'interface d'emboitement 35 dans laquelle cette dernière comporte un logement 44 complémentaire du corps 24 ainsi que des parois inclinées 45 destinées à canaliser la trajectoire du dispositif de saisie 22 vers ce logement 44, lors de la phase d'accouplement du dispositif de saisie 22 et de l'interface d'emboitement 35.

La figure 15 est une vue en coupe du dispositif de saisie 22 (et de la navette 14) après son accouplement avec l'interface d'emboitement 35. Dans cette position, le bord d'attaque 16 de l'aile de traction 5 est arrimé au charriot d'arrimage 12B par l'intermédiaire du dispositif de saisie 22. Le maintien d'une force de traction sur la ligne d'arrimage 20 n'entraine plus le déplacement du dispositif de saisie 22 (qui est en butée contre l'interface d'emboitement) mais maintient l'arrimage.

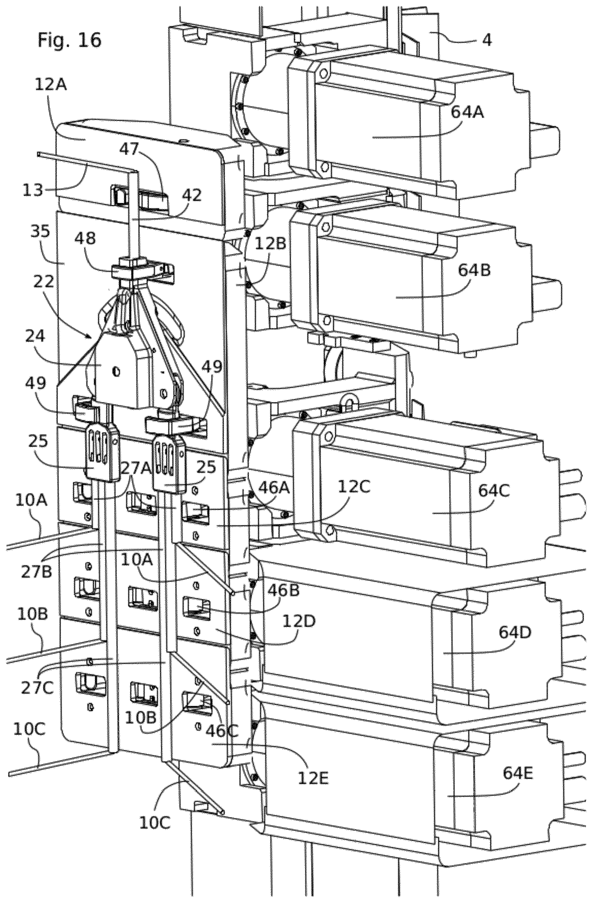

La figure 16 illustre le dispositif de saisie 22 ainsi arrimé au charriot d'arrimage 12B. Cette figure illustre également les autres charriots 12A, 12C, 12D, 12E. Chacun des charriots peut coulisser le long du mât d'arrimage 4, de manière pilotée, grâce à des actionneurs 64A, 64B, 64C, 64D, 64E. Dans le présent exemple, les actionneurs 64A, 64B, 64C, 64D, 64E sont des moteurs électriques commandant chacun un pignon engrenant sur une crémaillère fixée sur le mât d'arrimage 4 (les pignons et crémaillères ne sont pas visibles sur les figures).

Le charriot d'arrimage 12B comporte un crochet d'immobilisation supérieur 48 et une paire de crochets d'immobilisation inférieurs 49, qui sont mobiles entre une position rétractée, dans laquelle ils sont à l'écart du dispositif de saisie 22, et une position d'immobilisation (celle représentée à la figure 16), dans laquelle ils bloquent respectivement le corps 24 et les bras d'accrochage 25 contre l'interface d'emboitement 35.

Chacun des charriots de pliage 12C, 12D, 12E comporte une paire de crochets de saisie 46A, 46B, 46C, chacune de ces paires de crochets de saisie étant destinée à crocheter la paire de lignes de pliage 10A, 10B, 10C qui lui correspond. Ces crochets 12C, 12D, 12E sont en position rétractée sur la figure 16.

Le charriot de ferlage 12A comporte un crochet de saisie 47 destiné à actionner la ligne de ferlage 13 par la boucle 55. Le crochet de saisie 47 est également rétracté sur la figure 16.

Les crochets 46A, 46B, 46C, 47, 48 sont des crochets pivotants dans des chapes solidaires du charriot correspondant.

Durant le procédé de repli de l'aile de traction 5, dès lors que le dispositif de saisie 22 est accouplé à l'interface d'emboitement 35, les crochets d'immobilisation 48, 49 du charriot d'arrimage 12B sont activés vers leur position d'immobilisation pour fixer le dispositif de saisie 22 sur l'interface d'emboitement 35, comme illustré à la figure 16. À partir de cette étape, la traction de la ligne d'arrimage 20 n'est plus nécessaire pour maintenir l'arrimage.

Le crochet d'immobilisation supérieur 48 vient enserrer la parte supérieure du corps 24 tandis que les crochets d'immobilisation inférieurs 49 viennent enserrer les bras d'accrochage 25, au niveau de la zone de fixation 29, c'est-à-dire au-dessus des tiges d'accrochage 27A, 27B, 27C.

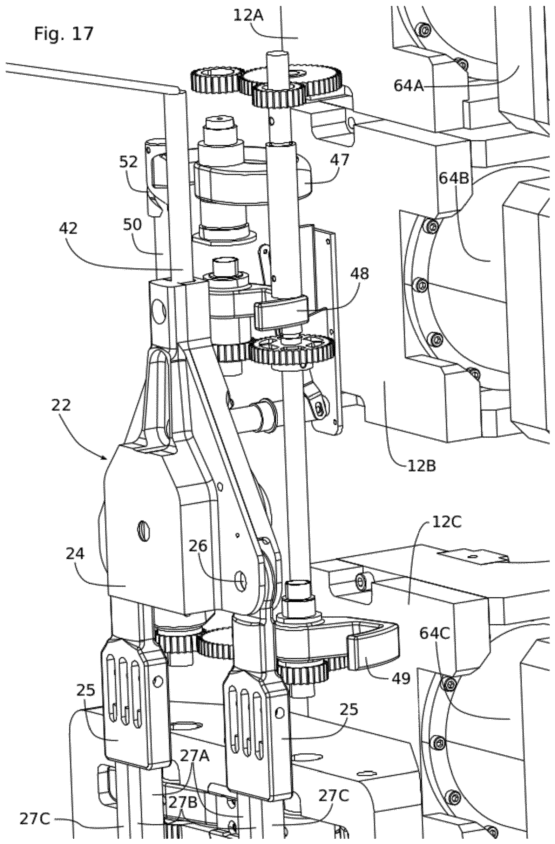

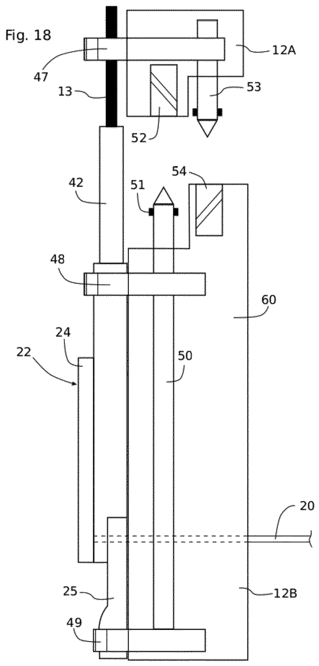

L'activation des crochets 48, 49 peut se faire par tout moyen, tels que par exemple un pivotement commandé par un moteur électrique, ou des moyens d'actionnement magnétique commandés à distance. Dans le présent exemple, en référence aux figures 17 et 18, l'actionnement des crochets 48, 49 se fait grâce au mouvement du charriot de ferlage 12A. La figure 17 représente en transparence les charriots pour rendre visible le mécanisme. Les crochets 48, 49 sont chacun montés rotatifs sur le charriot et sont actionnables soit par un arbre, soit par des pignons. Un arbre de commande 50 permet d'actionner en rotation l'ensemble des trois crochets 48, 49, grâce à l'agencement des pignons.

La figure 18 est une vue schématique montrant le principe de fonctionnement de ces éléments. L'arbre de commande 50 comporte à son extrémité un ergot 51 adapté à coopérer avec un chemin de came hélicoïdal 52, solidaire du charriot de ferlage 12A, de sorte que le rapprochement du charriot de ferlage 12A en direction du charriot d'arrimage 12B entraine la rotation de l'arbre de commande 50, et entraine donc les crochets 48, 49 vers leur position rétractée, et un éloignement du charriot de ferlage 12A par rapport au charriot d'arrimage 12B entraine les crochets 48, 49 vers leur position d'immobilisation. Un élément élastique, tel qu'un ressort de torsion, sollicite les crochets 48, 49 vers leur position d'immobilisation.

Comme illustré à la figure 18, le même type de mécanisme permet, lorsque l'éloignement du charriot de ferlage 12A par rapport au charriot d'arrimage 12B est poursuivi, d'entrainer également le crochet de ferlage 47 vers sa position de saisie, grâce à un arbre de commande 53 coopérant avec un chemin de came hélicoïdal 54.

De même que précédemment, les crochets de saisie 46A, 46B, 46C des charriots de pliage 12C, 12D, 12E peuvent également être pilotés par tout moyen permettant de les refermer sur les tiges d'accrochage 27A, 27B, 27C. Dans le présent exemple, le passage des crochets de saisie 46A, 46B, 46C à leur positon de saisie est de préférence commandé par l'éloignement du charriot de pliage correspondant par rapport au charriot précédent, grâce au même type de commande que précédemment, à arbre de commande, ergot, et chemin de came hélicoïdal.

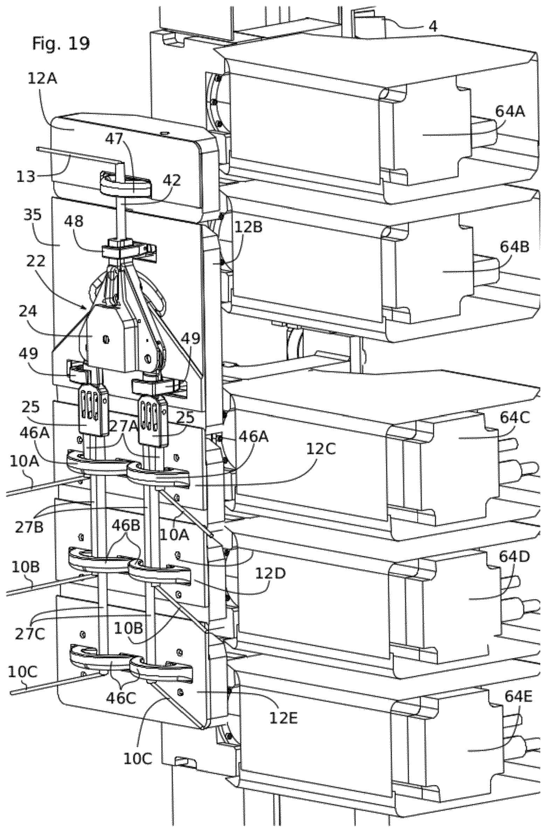

Ainsi, en référence à la figure 19, le charriot de ferlage 12A est d'abord légèrement éloigné du charriot d'arrimage 12B, ce qui provoque la fermeture des crochets d'immobilisation 48, 49 et l'immobilisation du dispositif de saisie 22. Le charriot de ferlage 12A reste ensuite dans cette position, le crochet 47 étant en position rétractée.

Les charriots de pliage 12C, 12D, 12E entament ensuite chacun un mouvement de descente le long du mât d'arrimage 4, en s'éloignant les uns des autres de sorte que les paires de crochets 46A, 46B, 46C viennent se refermer sur les tiges d'accrochage 27A, 27B, 27C, comme illustré à la figure 19.

Chaque crochet 46A du premier charriot de pliage 12C vient se refermer sur les trois tiges d'accrochage 27A, 27B, 27C, c'est-à-dire juste au-dessus de l'extrémité des premières tiges d'accrochage 27A.

Chaque crochet 46B du deuxième charriot de pliage 12D vient se refermer sur deux tiges d'accrochage 27B, 27C, c'est-à-dire juste au-dessus de l'extrémité des deuxièmes tiges d'accrochage 27B.

Chaque crochet 46C du troisième charriot de pliage 12E vient se refermer uniquement sur une troisième tige d'accrochage 27C, juste au-dessus de l'extrémité des troisièmes tiges d'accrochage 27C.

Chacune des paires de crochets 46A, 46B, 46C de pliage se trouve donc, dans cette position de la figure 19, juste au-dessus de la sortie des lignes de pliage 10A, 10B, 10C qui lui correspondent.

À partir de la position de la figure 19, le mouvement de descente des charriots de pliage 12C, 12D, 12E se poursuit de sorte que :
- les troisièmes lignes de pliage 10C sont tendues à la verticale par les crochets de saisie 46C qui descendent le long du mât d'arrimage 4 en coulissant le long de ces lignes de pliage 10C ;
- les deuxièmes lignes de pliage 10B sont tendues à la verticale par les crochets de saisie 46B qui descendent le long du mât d'arrimage 4 en coulissant le long de ces lignes de pliage 10B ainsi que des lignes de pliage 10C précédemment mises à la verticale par les crochets de saisie 46C ;
- les premières lignes de pliage 10A sont tendues à la verticale par les crochets de saisie 46A qui descendent le long du mât d'arrimage 4 en coulissant le long de ces lignes de pliage 10A ainsi que des lignes de pliage 10B, 10C précédemment mises à la verticale par les crochets de saisie 46B, 46C.

Durant la descente des charriots, les crochets 46A, 46B, 46C coulissent ainsi sur leur ligne de pliage correspondante, en ramenant cette ligne de pliage verticalement le long du mât d'arrimage 4.

Ce mouvement de descente est poursuivi jusqu'à la position de pliage des figures 6 et 7.

Une fois la position de pliage atteinte, l'aile de traction 5 peut ensuite être ferlée. Cette opération est réalisée par la remontée du charriot de ferlage 12A le long du mât d'arrimage 4, ce qui entraine d'abord une fermeture du crochet de ferlage 47 sur la tige de ferlage 42 (voir figure 19). La poursuite de la montée du charriot de ferlage 12A entraine ensuite une traction sur la boucle 55 (la boucle 55 est visible à la figure 12, et n'a pas été représentée sur les autres figures).

Le dispositif de saisie 22 permet ainsi de garantir un arrimage rapide et sûr du bord d'attaque 16 de l'aile de traction 5 sur le charriot d'arrimage 12B, et garantit également un crochetage automatique, sans défaillance, de chacune des lignes de pliage 10A, 10B, 10C ainsi que de la ligne de ferlage 13.

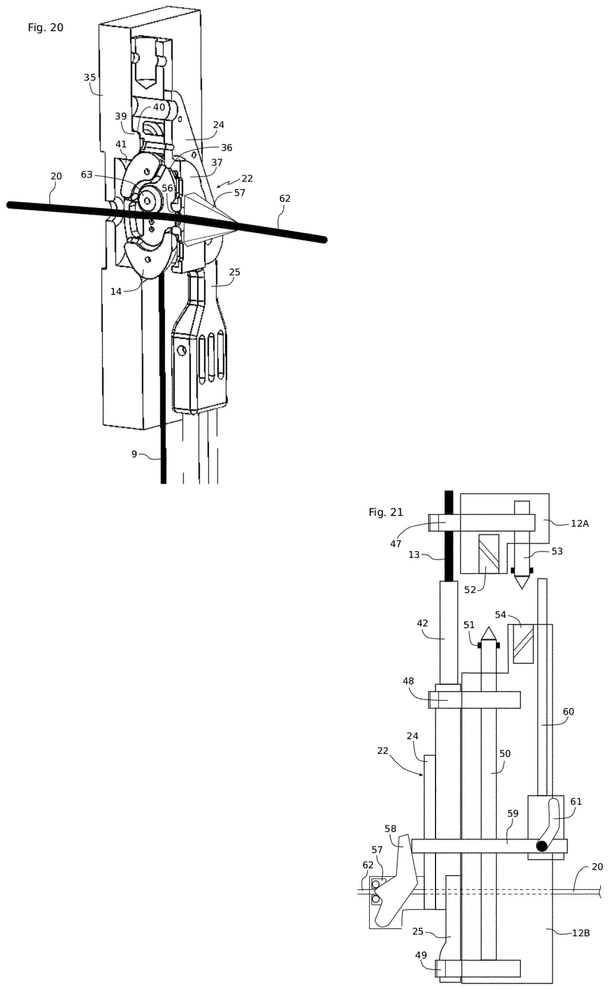

Un deuxième mode de réalisation visant l'agencement de la ligne d'arrimage 20 va maintenant être décrit en référence aux figures 20 et 21. Selon ce mode de réalisation, la ligne d'arrimage 20 n'est pas rattachée de manière permanente au corps 24 et permet d'assurer une fonction supplémentaire.

La figure 20 correspond à la figure 15 décrite précédemment, avec les variantes de ce deuxième mode de réalisation. La ligne d'arrimage 20 traverse un orifice 56 pratiqué dans la paroi de fond 37 du corps 24 et se prolonge par une portion supplémentaire 62 en direction de l'aile de traction 5. À sa sortie de l'orifice 56, la ligne d'arrimage 20 est fixée par un moyen de serrage qui comporte ici des mâchoires 57 maintenues fermées par des éléments élastiques.

Le dispositif de saisie 22 comporte ainsi un moyen de serrage adapté à occuper une position de serrage dans laquelle la ligne d'arrimage 20 et maintenue fixe sur le dispositif de saisie 22, et adapté à occuper une position de relâchement dans laquelle la ligne d'arrimage 20 coulisse librement par rapport au dispositif de saisie 20.

Le prolongement de la ligne d'arrimage 20 au-delà des mâchoires 57 permet à cette portion supplémentaire 62 de la ligne d'arrimage 20 de réaliser une fonction supplémentaire au sein de l'aile de traction 5. Cette fonction peut par exemple être relative à une action sur le profil aérodynamique de l'aile de traction 5, ou relative à une action de fermeture du bord de fuite de l'aile de traction 5.

Cette fonction supplémentaire est réalisée en commandant l'ouverture des mâchoires 57 et en exerçant une traction sur la ligne d'arrimage 20, ce qui entraine une traction sur cette portion supplémentaire 62 de la ligne de traction 20 et donc la réalisation de cette fonction supplémentaire, par exemple par une traction modifiant la forme du bord de fuite 17.

Les mâchoires 57 sont commandées en ouverture après que le dispositif de saisie 22 ait été immobilisé par les crochets d'immobilisation 48, 49, de sorte que la traction sur la ligne d'arrimage 20 ne soit plus utile pour maintenir l'arrimage.

La figure 21 illustre une réalisation des mâchoires 57 et de leur commande (selon une vue schématique similaire à la figure 18). Les mâchoires 57 sont ici associées à un levier d'ouverture 58 qui permet d'ouvrir les mâchoires 57. Le levier d'ouverture et les mâchoires 57 sont sollicités par des éléments élastiques, vers leur position correspondant au serrage de la ligne d'arrimage 20.

Le levier d'ouverture 58 est actionné par une tige 59 coopérant avec une tringle 60 comportant à son extrémité un chemin de came 61. La tringle 60, lorsqu'elle est repoussée vers le bas par le rapprochement du charriot de ferlage 12A, est prévue pour entrainer une rétractation de la tige 59 (et donc un relâchement du levier d'ouverture 58), ce qui entraine une fermeture des mâchoires 57. À l'inverse, la poursuite de l'éloignement du charriot de ferlage 12A par rapport au charriot d'arrimage 12B, après avoir immobilisé le dispositif de saisie, entraine l'ouverture des mâchoires 57 et donc la libération de la portion supplémentaire 62 de la ligne d'arrimage 20.

En variante, les mâchoires 57 peuvent être pilotées par tout autre moyen permettant à la ligne d'arrimage 20 d'être désolidarisée du dispositif de saisie 22 afin de réaliser une fonction supplémentaire au sein de l'aile de traction 5.

À l'issue de ces opérations conduisant au pliage de l'aile de traction (figures 6 et 7) et à son ferlage, le procédé de repli de l'aile de traction 5 est ensuite poursuivi jusqu'au stockage de l'aile de traction 5, par exemple en faisant coulisser l'ensemble des charriots le long du mât pour ranger l'aile dans un contenant adapté.

Le procédé de repli de l'aile de traction 5 est ainsi terminé.

Le procédé de déploiement de l'aile de traction 5, lors de la prochaine utilisation, est ensuite réalisé selon les mêmes opérations que celles décrites précédemment, exécutées en ordre inverse.

Des variantes de réalisation peuvent être mises en œuvre. Par exemple, les lignes peuvent être directement rattachées à l'extrémité des tiges d'accrochage ou de la tige de ferlage. Le nombre de charriots, de crochets, et de lignes peuvent bien entendu varier pour correspondre à une application particulière.

De plus, le moyen de serrage qui est ici constitué par les mâchoires 57 peut alternativement être réalisé par tout autre moyen d'immobiliser en traction une ligne, par exemple par un bloqueur à gaine textile.

## Revendications

1. Système de traction à aile captive, comportant :
- une aile de traction (5) adaptée à générer une force de traction sous l'effet du vent, cette aile de traction (5) présentant un bord d'attaque (16) et un bord de fuite (17) ;
- une plateforme de base (3) à laquelle l'aile de traction (5) est reliée par l'intermédiaire d'une ligne de traction (8), l'aile de traction (5) étant adaptée à être déployée et repliée par rapport à cette plateforme de base (3) ;
- un mât d'arrimage (4) pour l'aile de traction (5), disposé sur la plateforme de base (3) ;
- plusieurs lignes de pliage (10A, 10B, 10C);
ce système de traction à aile captive comportant:
- un charriot de pliage (12C,12D,12E) adapté à coulisser le long du mât d'arrimage (4) ;
- un dispositif de saisie (22) qui est rattaché au bord d'attaque (16) de l'aile de traction (5) et qui comporte un bras d'accrochage (25) muni d'une tige d'accrochage (27A,27B,27C), l'une des lignes de pliage (10A, 10B, 10C) étant saillante dans le prolongement de la tige d'accrochage (27A,27B,27C) ; le charriot de pliage (12C,12D,12E) comportant un crochet de saisie (46A,46B,46C) qui est mobile entre une position rétractée et une position de saisie dans laquelle le crochet de saisie (46A,46B,46C) entoure la tige d'accrochage (27A, 27B, 27C),
**caractérisé en ce que** les lignes de pliage ont chacune une extrémité fixée au bord d'attaque de l'aile de traction, en étant espacées les unes des autres le long de ce bord d'attaque.

2. Système de traction selon la revendication 1, **caractérisé en ce qu'**il comporte une ligne d'arrimage (20) reliant le dispositif de saisie (22) à la plateforme de base (3).

3. Système de traction selon l'une des revendications précédentes, **caractérisé en ce que** :
- le dispositif de saisie (22) est rattaché à une zone médiane (15) du bord d'attaque (16) ;
- les lignes de pliage (10A,10B,10C) s'étendent chacune entre la zone médiane (15), et une portion latérale (19) du bord d'attaque (16) ;
- la ligne de pliage (10A,10B,10C) qui est saillante de la tige d'accrochage (27A,27B,27C) est reliée par son extrémité opposée à l'une des portions latérales (19).

4. Système de traction selon l'une des revendications précédentes, **caractérisé en ce que** le dispositif de saisie (22) comporte un corps (24) sur lequel est monté pivotant le bras d'accrochage (25), entre une position de vol et une position d'accrochage dans laquelle la tige d'accrochage (27A,27B,27C) est disposée sensiblement verticalement.

5. Système de traction selon l'une des revendications précédentes, **caractérisé en ce que** la tige d'accrochage (27A,27B,27C) comporte un tube traversé par la ligne de pliage (10A,10B,10C), cette ligne de pliage (10A,10B,10C) étant raccordée par son extrémité au bras d'accrochage (25).

6. Système de traction selon l'une des revendications 2 à 5, **caractérisé en ce qu'**il comporte :
- une ligne guide (9) reliant le dispositif de saisie (22) au dispositif volant de commande de trajectoire (7) ;
- une navette (14) coulissante le long de la ligne guide (9), cette navette (14) comportant un moyen de guidage (63) traversé par la ligne d'arrimage (20).

7. Système de traction selon la revendication 6, **caractérisé en ce que** le dispositif de saisie (22) comporte un logement (36) pour la navette (14), la navette (14) étant mobile entre une configuration de coulissement dans laquelle elle coulisse le long de la ligne guide (9), et une configuration d'arrimage dans laquelle la navette (14) est disposée dans son logement (36).

8. Système de traction selon la revendication 7 lorsqu'elle dépend de la revendication 4, **caractérisé en ce que** le dispositif de saisie (22) comporte un levier (28) de commande du pivotement du bras d'accrochage (25) vers sa position d'accrochage, ce levier (28) étant adapté à être actionné par la navette (14) lorsqu'elle rejoint sa configuration d'arrimage.

9. Système de traction selon l'une des revendications précédentes, **caractérisé en ce qu'**il comporte un charriot d'arrimage (12B) adapté à coulisser le long du mat d'arrimage (4), ce charriot d'arrimage (12B) comportant une interface d'emboitement (35) pour le dispositif de saisie (22).

10. Système de traction selon la revendication 9, **caractérisé en ce que** le charriot d'arrimage (12B) comporte des moyens d'immobilisation du dispositif de saisie (22) contre l'interface d'emboitement (35).

11. Système de traction selon la revendication 10, **caractérisé en ce que** les moyens d'immobilisation comportent un crochet d'immobilisation (48,49) mobile entre une position rétractée et une position d'immobilisation dans laquelle le crochet d'immobilisation (48,49) bloque le bras d'accrochage (25) contre l'interface d'emboitement (35).

12. Système de traction selon l'une des revendications 10 ou 11 lorsqu'elles dépendent de la revendication 7, **caractérisé en ce que** la navette (14) présente une forme convexe adaptée à être logée dans une forme concave de l'interface d'emboitement (35), lorsque la navette (14) est en configuration d'arrimage.

13. Système de traction selon la revendication 12, **caractérisé en ce que** la navette (14) présente une forme oblongue.

14. Système de traction selon l'une des revendications précédentes, **caractérisé en ce que** :
- les lignes de pliage (10A,10B,10C) sont agencées par paires, les lignes de pliage d'une paire reliant le dispositif de saisie (22) à des points du bord d'attaque (16) situés symétriquement de part et d'autre du dispositif de saisie (22) ;
- le dispositif de saisie comporte deux bras d'accrochage (25) munis chacun d'autan de tiges d'accrochage (27A,27B,27C) que de paires de lignes de pliage (10A,10B,10C).

15. Système de traction selon la revendication 14, **caractérisé en ce que** les tiges d'accrochage (27A,27B,27C) sont disposées en escalier.

16. Système de traction selon l'une des revendications 14 ou 15, **caractérisé en ce qu'**il comporte autant de charriots de pliage (12C,12D,12E) que de paires de lignes de pliage (10A,10B,10C), chaque charriot de pliage (10A,10B,10C) comportant une paire de crochets de saisie (46A,46B,46C) mobiles un entre une position rétractée et une position de saisie dans laquelle les crochets de saisie (46A,46B,46C) d'une paire entourent les tiges d'accrochage (27A,27B,27C) des deux bras d'accrochage (25).

17. Système de traction selon l'une des revendications précédentes, **caractérisé en ce que** :
- l'aile de traction (5) comporte une ligne de ferlage (13) adaptée à ferler l'aile de traction (5) ;
- le dispositif de saisie (22) comporte une tige de ferlage (42), la ligne de ferlage (13) étant saillante dans le prolongement de la tige de ferlage (42) ;
- le système de traction comporte un charriot de ferlage (12A) adapté à coulisser le long du mât d'arrimage (4), le charriot de ferlage (12A) comportant un crochet de ferlage (47) qui est mobile entre une position rétractée et une position de saisie dans laquelle le crochet de ferlage (47) entoure la tige de ferlage (42).

18. Système de traction selon l'une des revendications 2 à 17, **caractérisé en ce que** le dispositif de saisie (22) comporte un moyen de serrage (57) adapté à occuper une position de serrage dans laquelle la ligne d'arrimage (20) est maintenue fixe sur le dispositif de saisie (22), et adapté à occuper une position de relâchement dans laquelle la ligne d'arrimage (20) coulisse librement par rapport au dispositif de saisie (20).

19. Système de traction selon la revendication 18, **caractérisé en ce que** la ligne d'arrimage (20) est prolongée au-delà du dispositif de saisie (22) par une portion supplémentaire (62) rattachée à l'aile de traction (5), la ligne de d'arrimage (20) étant adaptée à réaliser une action supplémentaire sur la forme de l'aile de traction (5) lorsque le moyen de serrage (57) est en position de relâchement.

20. Système de traction selon l'une des revendications précédentes, **caractérisé en ce que** le crochet de saisie (46A,46B,46C) est commandé par un mécanisme actionné par un autre charriot adapté à coulisser le long du mât d'arrimage (4).

21. Procédé de déploiement ou de repli de l'aile de traction d'un système de traction selon l'une des revendications 1 à 20, **caractérisé en ce qu'**il comporte une étape d'immobilisation du dispositif de saisie (22) par rapport au charriot de pliage (12C,12D,12E), dans une position où la tige d'accrochage (27A,27B,27C) est en vis-à-vis du crochet de saisie (46A,46B,46C).

## Patentansprüche

1. Schleppsystem mit angebundenem Schirm, welches aufweist:
- einen Schleppschirm (5), der dazu eingerichtet ist, unter dem Einfluss von Wind eine Zugkraft zu erzeugen, wobei dieser Schleppschirm (5) eine Anströmkante (16) und eine Abströmkante (17) aufweist;
- eine Basisplattform (3), mit der der Schleppschirm (5) über eine Schleppleine (8) verbunden ist, wobei der Schleppschirm (5) dazu eingerichtet ist, in Bezug auf diese Basisplattform (3) entfaltet und zusammengefaltet zu werden;
- einen Befestigungsmast (4) für den Schleppschirm (5), der auf der Basisplattform (3) angeordnet ist;
- mehrere Faltleinen (10A, 10B, 10C);
wobei dieses Schleppsystem mit angebundenem Schirm aufweist:
- einen Faltwagen (12C, 12D, 12E), der dazu eingerichtet ist, entlang des Befestigungsmastes (4) zu gleiten;
eine Greifvorrichtung (22), die an der Anströmkante (16) des Schleppschirms (5) befestigt ist und die einen Anhängearm (25) umfasst, der mit einer Anhängestange (27A, 27B, 27C) ausgestattet ist, wobei eine der Faltleinen (10A, 10B, 10C) in der Verlängerung der Anhängestange (27A, 27B, 27C) vorstehend ist; wobei der Faltwagen (12C, 12D, 12E) einen Greifhaken (46A, 46B, 46C) aufweist, der zwischen einer zurückgezogenen Position und einer Greifposition, in welcher der Greifhaken (46A, 46B, 46C) die Anhängestange (27A, 27B, 27C) umgibt, beweglich ist, **dadurch gekennzeichnet, dass** die Faltleinen jeweils ein Ende aufweisen, das an der Anströmkante des Schleppschirms befestigt ist, wobei sie entlang dieser Anströmkante voneinander beabstandet sind.

2. Schleppsystem nach Anspruch 1, **dadurch gekennzeichnet, dass** es eine Befestigungsleine (20) aufweist, welche die Greifvorrichtung (22) mit der Basisplattform (3) verbindet.

3. Schleppsystem nach einem der vorhergehenden Ansprüche, **dadurch gekennzeichnet, dass**:
- die Greifvorrichtung (22) an einem mittleren Bereich (15) der Anströmkante (16) befestigt ist;
- die Faltleinen (10A, 10B, 10C) sich jeweils zwischen dem mittleren Bereich (15) und einem seitlichen Abschnitt (19) der Anströmkante (16) erstrecken;
- die Faltleine (10A, 10B, 10C), die von der Anhängestange (27A, 27B, 27C) vorstehend ist, an ihrem entgegengesetzten Ende mit einem der seitlichen Abschnitte (19) verbunden ist.

4. Schleppsystem nach einem der vorhergehenden Ansprüche, **dadurch gekennzeichnet, dass** die Greifvorrichtung (22) einen Körper (24) aufweist, an dem der Anhängearm (25) zwischen einer Flugposition und einer Anhängeposition, in welcher die Anhängestange (27A, 27B, 27C) im Wesentlichen vertikal angeordnet ist, schwenkbar angebracht ist.

5. Schleppsystem nach einem der vorhergehenden Ansprüche, **dadurch gekennzeichnet, dass** die Anhängestange (27A, 27B, 27C) ein Rohr umfasst, das von der Faltleine (10A, 10B, 10C) durchquert wird, wobei diese Faltleine (10A, 10B, 10C) an ihrem Ende mit dem Anhängearm (25) verbunden ist.

6. Schleppsystem nach einem der Ansprüche 2 bis 5, **dadurch gekennzeichnet, dass** es aufweist:
- eine Führungsleine (9), welche die Greifvorrichtung (22) mit der fliegenden Vorrichtung zur Bahnsteuerung (7) verbindet;
- einen entlang der Führungsleine (9) gleitenden Schlitten (14), wobei dieser Schlitten (14) ein Führungsmittel (63) umfasst, das von der Befestigungsleine (20) durchquert wird.

7. Schleppsystem nach Anspruch 6, **dadurch gekennzeichnet, dass** die Greifvorrichtung (22) eine Aufnahme (36) für den Schlitten (14) aufweist, wobei der Schlitten (14) zwischen einer Gleitkonfiguration, in der er entlang der Führungsleine (9) gleitet, und einer Befestigungskonfiguration, in der der Schlitten (14) in seiner Aufnahme (36) angeordnet ist, beweglich ist.

8. Schleppsystem nach Anspruch 7, wenn abhängig von Anspruch 4, **dadurch gekennzeichnet, dass** die Greifvorrichtung (22) einen Hebel (28) zur Steuerung der Schwenkung des Anhängearmes (25) zu seiner Anhängeposition hin aufweist, wobei dieser Hebel (28) dazu eingerichtet ist, von dem Schlitten (14) betätigt zu werden, wenn er in seine Befestigungskonfiguration zurückkehrt.

9. Schleppsystem nach einem der vorhergehenden Ansprüche, **dadurch gekennzeichnet, dass** es einen Befestigungswagen (12B) umfasst, der dazu eingerichtet ist, entlang des Befestigungsmastes (4) zu gleiten, wobei dieser Befestigungswagen (12B) eine Aufnahmeschnittstelle (35) für die Greifvorrichtung (22) umfasst.

10. Schleppsystem nach Anspruch 9, **dadurch gekennzeichnet, dass** der Befestigungswagen (12B) Mittel zum Arretieren der Greifvorrichtung (22) an der Aufnahmeschnittstelle (35) umfasst.

11. Schleppsystem nach Anspruch 10, **dadurch gekennzeichnet, dass** die Arretiermittel einen Arretierhaken (48, 49) umfassen, der zwischen einer zurückgezogenen Position und einer Arretierposition, in welcher der Arretierhaken (48, 49) den Anhängearm (25) an der Aufnahmeschnittstelle (35) blockiert, beweglich ist.

12. Schleppsystem nach einem der Ansprüche 10 oder 11, wenn abhängig von Anspruch 7, **dadurch gekennzeichnet, dass** der Schlitten (14) eine konvexe Form aufweist, die geeignet ist, in einer konkaven Form der Aufnahmeschnittstelle (35) aufgenommen zu werden, wenn sich der Schlitten (14) in der Befestigungskonfiguration befindet.

13. Schleppsystem nach Anspruch 12, **dadurch gekennzeichnet, dass** der Schlitten (14) eine längliche Form aufweist.

14. Schleppsystem nach einem der vorhergehenden Ansprüche, **dadurch gekennzeichnet, dass**:
- die Faltleinen (10A, 10B, 10C) paarweise angeordnet sind, wobei die Faltleinen eines Paares die Greifvorrichtung (22) mit Punkten der Anströmkante (16) verbinden, die sich symmetrisch beiderseits der Greifvorrichtung (22) befinden;
- die Greifvorrichtung zwei Anhängearme (25) aufweist, die jeweils mit ebenso vielen Anhängestangen (27A, 27B, 27C) ausgestattet sind, wie Paare von Faltleinen (10A, 10B, 10C) vorhanden sind.

15. Schleppsystem nach Anspruch 14, **dadurch gekennzeichnet, dass** die Anhängestangen (27A, 27B, 27C) treppenförmig angeordnet sind.

16. Schleppsystem nach einem der Ansprüche 14 oder 15, **dadurch gekennzeichnet, dass** es ebenso viele Faltwagen (12C, 12D, 12E) wie Paare von Faltleinen (10A, 10B, 10C) aufweist, wobei jeder Faltwagen (10A, 10B, 10C) ein Paar Greifhaken (46A, 46B, 46C) aufweist, die zwischen einer zurückgezogenen Position und einer Greifposition, in welcher die Greifhaken (46A, 46B, 46C) eines Paares die Anhängestangen (27A, 27B, 27C) der zwei Anhängearme (25) umgeben, beweglich sind.

17. Schleppsystem nach einem der vorhergehenden Ansprüche, **dadurch gekennzeichnet, dass**:
der Schleppschirm (5) eine Festzurrleine (13) aufweist, die dazu eingerichtet ist, den Schleppschirm (5) festzuzurren;
- die Greifvorrichtung (22) eine Festzurrstange (42) aufweist, wobei die Festzurrleine (13) in der Verlängerung der Festzurrstange (42) vorstehend ist;
- das Schleppsystem einen Festzurrwagen (12A) aufweist, der dazu eingerichtet ist, entlang des Befestigungsmastes (4) zu gleiten, wobei der Festzurrwagen (12A) einen Festzurrhaken (47) aufweist, der zwischen einer zurückgezogenen Position und einer Greifposition, in welcher der Festzurrhaken (47) die Festzurrstange (42) umgibt, beweglich ist.

18. Schleppsystem nach einem der Ansprüche 2 bis 17, **dadurch gekennzeichnet, dass** die Greifvorrichtung (22) ein Spannmittel (57) aufweist, das dazu eingerichtet ist, eine Spannposition einzunehmen, in welcher die Befestigungsleine (20) fest an der Greifvorrichtung (22) gehalten wird, und dazu eingerichtet ist, eine Löseposition einzunehmen, in welcher die Befestigungsleine (20) bezüglich der Greifvorrichtung (20) frei gleitet.

19. Schleppsystem nach Anspruch 18, **dadurch gekennzeichnet, dass** die Befestigungsleine (20) über die Greifvorrichtung (22) hinaus durch einen zusätzlichen Abschnitt (62) verlängert ist, der am Schleppschirm (5) befestigt ist, wobei die Befestigungsleine (20) dazu eingerichtet ist, eine zusätzliche Wirkung auf die Form des Schleppschirms (5) auszuüben, wenn sich das Spannmittel (57) in der Löseposition befindet.

20. Schleppsystem nach einem der vorhergehenden Ansprüche, **dadurch gekennzeichnet, dass** der Greifhaken (46A, 46B, 46C) von einem Mechanismus gesteuert wird, der von einem weiteren Wagen betätigt wird, der dazu eingerichtet ist, entlang des Befestigungsmastes (4) zu gleiten.

21. Verfahren zum Entfalten oder Zusammenfalten des Schleppschirms eines Schleppsystems nach einem der Ansprüche 1 bis 20, **dadurch gekennzeichnet, dass** es einen Schritt der Arretierung der Greifvorrichtung (22) bezüglich des Faltwagens (12C, 12D, 12E) in einer Position, in der sich die Anhängestange (27A, 27B, 27C) gegenüber dem Greifhaken (46A, 46B, 46C) befindet, umfasst.

## Claims

1. A tethered-wing traction system having:
- a traction wing (5) designed to generate a traction force under the effect of the wind, this traction wing (5) having a leading edge (16) and a trailing edge (17);
- a base platform (3) to which the traction wing (5) is connected via a traction line (8), the traction wing (5) being designed to be deployed and folded in relation to this base platform (3);
- a mooring mast (4) for the traction wing (5), disposed on the base platform (3);
- multiple folding lines (10A, 10B, 10C) this tethered-wing traction system comprises:
- a folding carriage (12C, 12D, 12E) designed to slide along the mooring mast (4);
- a capturing device (22) which is attached to the leading edge (16) of the traction wing (5) and has a fastening arm (25) provided with a fastening rod (27A, 27B, 27C), one of the folding lines (10A, 10B, 10C) projecting in the continuation of the fastening rod (27A, 27B, 27C); the folding carriage (12C, 12D, 12E) having a capturing hook (46A, 46B, 46C) which is movable between a retracted position and a capturing position, in which the capturing hook (46A, 46B, 46C) surrounds the fastening rod (27A, 27B, 27C) **characterized in that** the folding lines each having an end fixed to the leading edge of the traction wing, the ends being spaced apart from one another along this leading edge.

2. The traction system as claimed in claim 1, **characterized in that** it has a mooring line (20) connecting the capturing device (22) to the base platform (3).

3. The traction system as claimed in one of the preceding claims, **characterized in that**:
- the capturing device (22) is attached to a median zone (15) of the leading edge (16);
- the folding lines (10A, 10B, 10C) each extend between the median zone (15) and a lateral portion (19) of the leading edge (16);
- the folding line (10A, 10B, 10C) which projects from the fastening rod (27A, 27B, 27C) is connected by its opposite end to one of the lateral portions (19).

4. The traction system as claimed in one of the preceding claims, **characterized in that** the capturing device (22) has a body (24) on which the fastening arm (25) is mounted so as to be able to pivot between a flight position and a fastening position, in which the fastening rod (27A, 27B, 27C) is disposed substantially vertically.

5. The traction system as claimed in one of the preceding claims, **characterized in that** the fastening rod (27A, 27B, 27C) has a tube through which the folding line (10A, 10B, 10C) passes, this folding line (10A, 10B, 10C) being connected by its end to the fastening arm (25).

6. The traction system as claimed in one of claims 2 to 5, **characterized in that** it has:
- a guide line (9) connecting the capturing device (22) to the flying trajectory control device (7) ;
- a shuttle (14) which can slide along the guide line (9), this shuttle (14) having a guide means (63) through which the mooring line (20) passes.

7. The traction system as claimed in claim 6, **characterized in that** the capturing device (22) has a receiving portion (36) for the shuttle (14), the shuttle (14) being movable between a sliding configuration, in which it slides along the guide line (9), and a mooring configuration, in which the shuttle (14) is disposed in its receiving portion (36).

8. The traction system as claimed in claim 7 when it is dependent on claim 4, **characterized in that** the capturing device (22) has a lever (28) for controlling the pivoting of the fastening arm (25) toward its fastening position, this lever (28) being designed to be actuated by the shuttle (14) when it reaches its mooring configuration.

9. The traction system as claimed in one of the preceding claims, **characterized in that** it has a mooring carriage (12B) designed to slide along the mooring mast (4), this mooring carriage (12B) having an interlocking interface (35) for the capturing device (22).

10. The traction system as claimed in claim 9, **characterized in that** the mooring carriage (12B) has means for immobilizing the capturing device (22) against the interlocking interface (35).

11. The traction system as claimed in claim 10, **characterized in that** the immobilizing means have an immobilizing hook (48, 49) which is movable between a retracted position and an immobilizing position, in which the immobilizing hook (48, 49) locks the fastening arm (25) against the interlocking interface (35).

12. The traction system as claimed in either of claims 10 and 11 when they are dependent on claim 7, **characterized in that** the shuttle (14) has a convex shape suitable for being received in a concave shape of the interlocking interface (35) when the shuttle (14) is in the mooring configuration.

13. The traction system as claimed in claim 12, **characterized in that** the shuttle (14) has an oblong shape.

14. The traction system as claimed in one of the preceding claims, **characterized in that**:
- the folding lines (10A, 10B, 10C) are arranged in pairs, the folding lines of a pair connecting the capturing device (22) to points on the leading edge (16) that are symmetrically on either side of the capturing device (22);
- the capturing device has two fastening arms (25) each provided with as many fastening rods (27A, 27B, 27C) as there are pairs of folding lines (10A, 10B, 10C).

15. The traction system as claimed in claim 14, **characterized in that** the fastening rods (27A, 27B, 27C) are disposed in stepped fashion.

16. The traction system as claimed in either of claims 14 and 15, **characterized in that** it has as many folding carriages (12C, 12D, 12E) as pairs of folding lines (10A, 10B, 10C), each folding carriage (10A, 10B, 10C) having a pair of capturing hooks (46A, 46B, 46C) which are movable between a retracted position and a capturing position, in which the capturing hooks (46A, 46B, 46C) of a pair surround the fastening rods (27A, 27B, 27C) of the two fastening arms (25).

17. The traction system as claimed in one of the preceding claims, **characterized in that**:
- the traction wing (5) has a furling line (13) designed to furl the traction wing (5);
- the capturing device (22) has a furling rod (42), the furling line (13) projecting in the continuation of the furling rod (42);
- the traction system has a furling carriage (12A) designed to slide along the mooring mast (4), the furling carriage (12A) having a furling hook (47) which is movable between a retracted position and a capturing position, in which the furling hook (47) surrounds the furling rod (42).

18. The traction system as claimed in one of claims 2 to 17, **characterized in that** the capturing device (22) has a clamping means (57) designed to take up a clamping position in which the mooring line (20) is kept fixed in place on the capturing device (22), and designed to take up a release position in which the mooring line (20) slides freely in relation to the capturing device (20).

19. The traction system as claimed in claim 18, **characterized in that** the mooring line (20) is continued beyond the capturing device (22) by an additional portion (62) attached to the traction wing (5), the mooring line (20) being designed to perform an additional action on the form of the traction wing (5) when the clamping means (57) is in the release position.

20. The traction system as claimed in one of the preceding claims, **characterized in that** the capturing hook (46A, 46B, 46C) is controlled by a mechanism actuated by another carriage designed to slide along the mooring mast (4).

21. A process for deploying or folding the traction wing of a traction system as claimed in one of claims 1 to 20, **characterized in that** it comprises a step of immobilizing the capturing device (22) in relation to the folding carriage (12C, 12D, 12E) in a position in which the fastening rod (27A, 27B, 27C) faces the capturing hook (46A, 46B, 46C).
